# EUROPÄISCHE PATENTSCHRIFT

(11) **EP 2 294 952 B1**
(45) Veröffentlichungstag und Bekanntmachung des Hinweises auf die Patenterteilung: **28.12.2011**
(21) Anmeldenummer: 09170182.1
(22) Anmeldetag: 14.09.2009
(51) Int. Cl.: A47J 31/44

(54) **Einrichtung zur Ausgabe von Milch und/oder Milchschaum**
Device for dispensing milk and/or milk foam
Dispositif de distribution de lait et/ou de mousse de lait

(43) Veröffentlichungstag der Anmeldung: 16.03.2011
(73) Patentinhaber: Schaerer AG, 4528 Zuchwil (CH)
(72) Erfinder: Lüssi, André, 3303 Jegenstorf (CH)
(74) Vertreter: BOVARD AG

(56) Entgegenhaltungen:
- EP-A- 0 157 069
- WO-A-2008/083941
- US-A- 6 099 878

## Beschreibung

Die vorliegende Erfindung bezieht sich auf eine Einrichtung zur Ausgabe von Milch und/oder Milchschaum aus einem Milch enthaltenden Behälter, der in einen in einem Rahmen gehaltenen, kühlbaren Schrank einsetzbar ist, und in welchen eine Entnahmeleitung einbringbar ist, welche über eine erste Leitung mit einer ausserhalb des kühlbaren Schrankes angeordneten Emulgiereinrichtung verbunden ist, in welche erste Leitung eine Pumpe zur Förderung der Milch eingesetzt ist, durch welche die auszugebende Milch in die Emulgiereinrichtung und zur Ausgabeeinheit gelangt, in welche Emulgiereinrichtung über eine Wasserdampfleitung Wasserdampf einführbar ist, mit welchem die durch die Emulgiereinrichtung geleitete Milch aufschäumbar und/oder erwärmbar ist.

Derartige Einrichtungen sind in vielfacher Weise bekannt (siehe US-A-6099878), sie können beispielsweise in Kaffeemaschinen eingesetzt sein, wodurch über diese Kaffeemaschine in optimaler Weise beispielsweise Cappuccinokaffee hergestellt werden kann. Mit dieser Einrichtung lässt sich neben dem Milchschaum auch Milch erwärmen, es ist auch kalte Milch lieferbar.

Nicht geeignet ist diese Einrichtung zur Herstellung von kaltem Milchschaum, der die gewünschte Qualität aufweist.

Die Aufgabe der vorliegenden Erfindung besteht somit darin, eine Einrichtung zu schaffen, welche kalten Milchschaum, warmen Milchschaum, heisse Milch und kalte Milch in optimalster Qualität liefern kann, wobei der Bezug aller Produkte, die durch diese Einrichtung ausgeliefert werden können, in dosierbaren Mengen bezogen werden sollen.

Erfindungsgemäss erfolgt die Lösung dieser Aufgabe dadurch, dass in der ersten Leitung zwischen der Pumpe und der Emulgiereinrichtung eine Abzweigung angebracht ist, an welcher eine zweite Leitung angebracht ist, in welcher ein erstes Drosselventil und eine Beruhigungsstrecke angeordnet sind, welche zweite Leitung in die Ausgabeeinheit mündet, dass in der ersten Leitung zwischen Abzweigung und Emulgiereinrichtung ein erstes Schliessventil und in der zweiten Leitung vor der Ausgabeeinheit ein zweites Schliessventil angeordnet ist, und dass in die erste Leitung und in die zweite Leitung Luft zuführbar ist.

Mit einer derartigen Einrichtung kann das zu beziehende Produkt in optimalster Qualität geliefert werden. Während die heisse Milch, die kalte Milch und der warme Milchschaum über die Emulgiereinrichtung bezogen werden, wird die kalte Milche, welcher Luft zugeführt wird, durch ein erstes Drosselventil und eine Beruhigungsstrecke geleitet, und gelangt danach in die Ausgabeeinheit. Beim Durchfliessen des Drosselventils emulgiert das Luft-Milch-Gemisch zu Milchschaum, die Luft ist in der Milch teilweise noch in der Form von grossen Blasen vorhanden, erst in der Beruhigungsstrecke emulgiert das Luft-Milch-Gemisch zu feinblasigem Schaum in der gewünschten Qualität.

In vorteilhafter Weise erfolgt die Luftzuführung über mindestens eine erste Luftzuführungsleitung, welche mit einem zweiten Drosselventil ausgestattet ist, wodurch die Luftzuführung in der erforderlichen Menge erfolgt.

In vorteilhafter Weise ist die erste Luftzuführungsleitung mit einem dritten Schliessventil verschliessbar, dadurch kann die Luftzuführung, beispielsweise zum Bezug von kalter oder heisser Milch, unterbunden werden.

In vorteilhafter Weise ist das zweite Drosselventil regulierbar, sodass die zugeführte Luft in der gewünschten Menge beigemischt werden kann, um den gewünschten Milchschaum erhalten zu können.

In vorteilhafter Weise ist in die erste Luftzuführungsleitung eine erste Luftpumpe eingesetzt, wodurch die beigemischte Luftmenge noch optimaler reguliert werden kann.

In vorteilhafter Weise mündet die erste Luftzuführungsleitung vor der Pumpe in die erste Leitung, wodurch die zuzuführende Luft von der Pumpe angesaugt wird.

Die erste Luftzuführungsleitung kann auch nach der Pumpe in die erste Leitung münden, hierzu ist in dieser ersten Luftzuführungsleitung aber eine Luftpumpe erforderlich, um die Luft in genügender Menge beimischen zu können.

Eine weitere vorteilhafte Ausgestaltung der Erfindung besteht darin, dass die Luftzuführung über die erste Luftzuführungsleitung oder über eine zweite Luftzuführungsleitung erfolgt, welche mit einem dritten Drosselventil ausgestattet ist. Durch diese Anordnung besteht die Möglichkeit, die Luft über die erste Luftzuführungsleitung der Milch beizumischen, welche über die Emulgiereinrichtung geleitet wird, über welche kalte und warme Milch und warmer Milchschaum ausgegeben wird, wobei die Zuführung der Luftmenge konstant gehalten werden kann, während die Fördermenge für die Milch durch die Pumpe geregelt wird. Über die zweite Luftzuführungsleitung wird die Luft der Milch beigemischt, welche durch das erste Drosselventil und die Beruhigungsstrecke zur Ausgabeeinheit geleitet werden, wobei auch hier die Luftzufuhr konstant gehalten werden kann, während die Milchmenge wiederum durch die Pumpe geregelt wird.

In vorteilhafter Weise ist die zweite Luftzuführungsleitung mit einem vierten Schliessventil verschliessbar, wodurch die Zuführung der Luft durch diese zweite Luftzuführungsleitung unterbunden werden kann.

In vorteilhafter Weise ist auch in die zweite Luftzuführungsleitung eine zweite Luftpumpe eingesetzt, wodurch die zugeführte Luftmenge unter Druck der Milch beigemischt werden kann.

Je nach Konfiguration der Anlage kann die zweite Luftzuführungsleitung vor der Pumpe in die erste Leitung münden, sie kann aber auch nach der Pumpe in die erste Leitung münden.

Die zweite Luftzuführungsleitung kann auch in die Wasserdampfleitung münden, wodurch die Luft und der Wasserdampf gemeinsam der Milch in der Emulgiereinrichtung beigemischt werden.

Eine weitere vorteilhafte Ausgestaltung der Erfindung besteht darin, dass das erste Drosselventil einstellbar ist, wodurch die Beschaffenheit des kalten Milchschaums reguliert werden kann.

Eine vorteilhafte Ausgestaltung der Erfindung besteht darin, dass die Beruhigungsstrecke aus einem Schlauch mit einer vorgegebenen Länge gebildet ist, in welchem sich das Luft-Milch-Gemisch in optimaler Weise zu feinblasigem Schaum entwickeln kann.

In vorteilhafter Weise mündet in die erste Leitung vor der Pumpe eine Reinigungsmittelleitung, über welche ein Reinigungsmittel zuführbar ist, und dass in die Reinigungsmittelleitung ein fünftes Schliessventil eingesetzt ist. Dadurch lässt sich das ganze System in bestimmten Intervallen reinigen.

In vorteilhafter Weise ist in die Entnahmeleitung ein sechstes Schliessventil eingesetzt, wodurch die Reinigung des Systems ohne Herausnahme des Milchbehälters ausgeführt werden kann.

Ausführungsformen der Erfindung werden nachfolgend anhand der beiliegenden Zeichnungen beispielhaft näher erläutert.

Es zeigt
Fig. 1 in schematischer Darstellung eine erste Ausführungsform einer erfindungsgemässen Einrichtung zur Ausgabe von Milch und/oder Milchschaum;
Fig. 2 in schematischer Darstellung eine weitere Ausführungsform einer erfindungsgemässen Einrichtung;
Fig. 3 in schematischer Darstellung die erfindungsgemässe Einrichtung gemäss Fig. 1, mit zusätzlich eingesetzten Luftpumpen;
Fig. 4 in schematischer Darstellung die Einrichtung gemäss Fig. 2 mit zusätzlich eingesetzten Luftpumpen;
Fig. 5 in schematischer Darstellung eine weitere Ausführungsform der erfindungsgemässen Einrichtung zur Ausgabe von Milch und/oder Milchschaum;
Fig. 6 in schematischer Darstellung eine weitere Ausführungsform der erfindungsgemässen Einrichtung zur Ausgabe von Milch und/oder Milchschaum;
Fig. 7 in schematischer Darstellung eine Einrichtung entsprechend der Einrichtung gemäss Fig. 6, bei welcher aber die Luftzuführung hinter der Pumpe erfolgt;
Fig. 8 in schematischer Darstellung eine weitere Ausführungsform der erfindungsmässen Einrichtung zur Ausgabe von Milch und/oder Milchschaum;
Fig. 9 in schematischer Darstellung die Einrichtung gemäss Fig. 8, bei welcher aber die Luftpumpe der ersten Luftzuführung weggelassen ist;
Fig. 10 im Schnitt ein kombiniertes Schlauchquetschventil für zwei Leitungen, bei welcher die obere Leitung gesperrt ist;
Fig. 11 das Schlauchquetschventil gemäss Fig. 10, bei welchem beide Leitungen offen sind; und
Fig. 12 das Schlauchquetschventil gemäss Fig. 10 und Fig. 11, bei welchem die untere Leitung gesperrt ist.

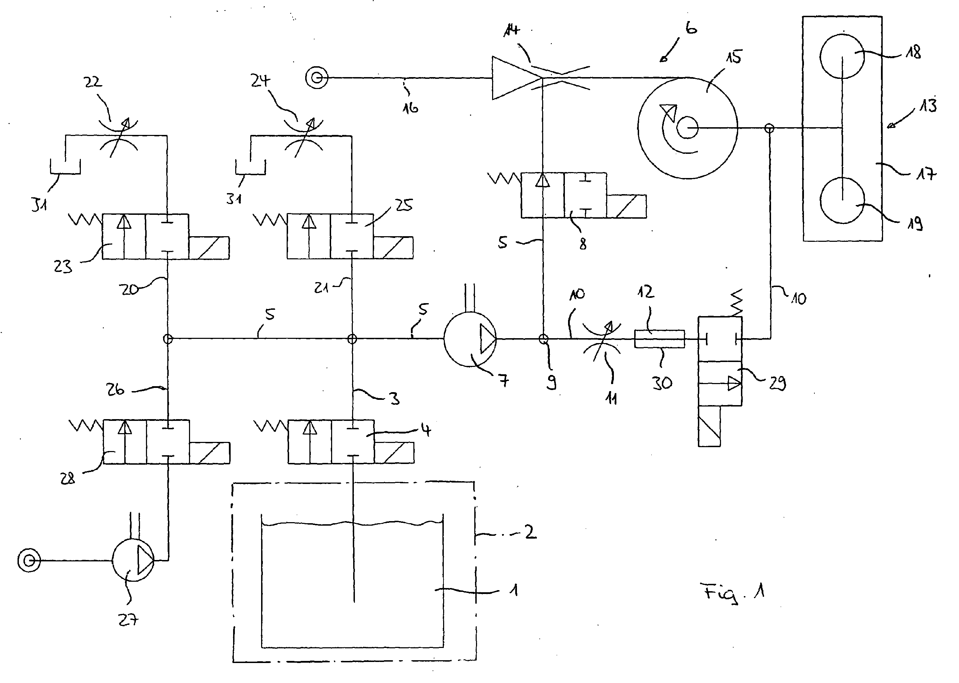

Aus Fig. 1 ist schematisch eine Einrichtung zur Ausgabe von Milch und/oder Milchschaum dargestellt, bei welcher in bekannter nicht dargestellter Weise die einzelnen Bauteile in einem Rahmen eingesetzt sind. Die Einrichtung weist einen Behälter 1 auf, der in einen im Rahmen gehaltenen schematisch dargestellten kühlbaren Schrank 2 eingesetzt ist und welcher kalte Milch enthält. In den Behälter 1 eingesetzt ist eine Entnahmeleitung 3, welche über ein sechstes Schliessventil 4 in bekannter Weise verschliessbar ist. Diese Entnahmeleitung 3 mündet in eine erste Leitung 5, welche die über die Entnahmeleitung 3 dem Behälter 1 entnommene Milch zu einer Emulgiereinrichtung 6 führt. In die erste Leitung 5 eingesetzt ist eine Pumpe 7, mit welcher die Milch in diese Emulgiereinrichtung 6 gefördert werden kann. Zwischen der Pumpe 7 und der Emulgiereinrichtung 6 ist ein erstes Schliessventil 8 eingesetzt, mit welchem die erste Leitung in bekannter Weise verschliessbar ist.

In der ersten Leitung 5 ist zwischen der Pumpe 7 und dem ersten Schliessventil 8 eine Abzweigung 9 angebracht, an welcher eine zweite Leitung 10 angeordnet ist. In dieser zweiten Leitung 10 ist ein erstes Drosselventil 11 und eine Beruhigungsstrecke 12 angebracht. Hinter der Beruhigungsstrecke 12 ist in die zweite Leitung 10 ein zweites Schliessventil 13 eingesetzt, mit welchem diese zweite Leitung 10 verschliessbar ist. Die zweite Leitung 10 mündet schliesslich ebenfalls in die Ausgabeeinheit 13.

In bekannter Weise setzt sich die Emulgiereinrichtung 6 aus einer Strahlpumpe 14 und einer Emulgierkammer 15 zusammen. Die erste Leitung 5 mündet in diese Strahlpumpe 14, ebenfalls in die Strahlpumpe 14 mündet in bekannter Weise eine Wasserdampfleitung 16, über welche der Strahlpumpe 14 Wasserdampf zugeführt werden kann. Die Strahlpumpe 14 ist mit der Emulgierkammer 15 verbunden, die Emulgierkammer 15 ist mit der Ausgabeeinheit 13 verbunden.

Diese Ausgabeeinheit 13 weist ein Verteilgefäss 17 auf, das mit zwei Ausgabenippeln 18 und 19 ausgestattet ist, sodass gleichzeitig auch zwei Gefässe gefüllt werden können.

An die erste Leitung 5 angeschlossen ist eine erste Luftzuführungsleitung 20 und eine zweite Luftzuführungsleitung 21. Die erste Luftzuführungsleitung 20 ist mit einem zweiten Drosselventil 22 und einem dritten Schliessventil 23 versehen. Die zweite Luftzuführungsleitung 21 ist mit einem dritten Drosselventil 24 und einem vierten Schliessventil 25 versehen. Bei dieser Ausführungsform der erfindungsgemässen Einrichtung münden die beiden Luftzuführungsleitungen 20 und 21 vor der Pumpe 7 in die erste Leitung 5.

Ebenfalls in die erste Leitung 5 mündet eine Reinigungsmittelleitung 26, in welche eine Reinigungsmittelpumpe 27 und ein fünftes Schliessventil 28 eingesetzt ist.

Wenn nun mit dieser in Fig. 1 dargestellten Einrichtung kalte Milch bezogen werden soll, wird das sechste Schliessventil 4 und das erste Schliessventil 8 geöffnet. Das dritte Schliessventil 23, das vierte Schliessventil 25, das fünfte Schliessventil 28 und das zweite Schliessventil 29 sind geschlossen. Die Pumpe 7 wird in Betrieb genommen, die Milch wird aus dem Behälter 1 über die Entnahmeleitung 3 und die erste Leitung 5 angesaugt und in die Strahlpumpe 14 gefördert, von wo sie in die Emulgierkammer 15 und von dort in das Verteilgefäss 17 gelangt und durch die Ausgabenippel 18 und 19 in die darunter gestellten Gefäss ausläuft. Der Strahlpumpe 14 wird kein Dampf zugeführt.

Zur Ausgabe von heisser Milch ist wiederum das sechste Schliessventil 4 und das erste Schliessventil 8 geöffnet, das dritte Schliessventil 23, das vierte Schliessventil 25, das fünfte Schliessventil 28 und das zweite Schliessventil 29 sind wiederum geschlossen. Die Pumpe 7 wird eingeschaltet, die kalte Milch wird aus dem Behälter 1 über die Entnahmeleitung 3 und die erste Leitung 5 angesaugt und in die Strahlpumpe 14 gefördert, dieser Strahlpumpe 14 wird über die Wasserdampfleitung 16 Wasserdampf zugeführt, die Milch wird erhitzt, gelangt in die Emulgierkammer 15 und von dort in das Verteilgefäss 17 und über die Ausgabenippel 18 und 19 in das darunter gestellte Gefäss.

Die Temperatur der heissen Milch ist eine Funktion der zugeführten Dampfmenge und der durch die Pumpe 7 geförderten Milchmenge. Da die Dampfmenge etwa konstant gehalten wird, wird die Temperatur der heissen Milch über die Fördermenge der Pumpe gesteuert.

Zur Erzeugung von warmem Milchschaum wird das sechste Schliessventil 4, das erste Schliessventil 8 und das dritte Schliessventil 23 geöffnet. Das zweite Schliessventil 29, das vierte Schliessventil 25 und das fünfte Schliessventil 28 werden geschlossen. Die Pumpe 7 wird eingeschaltet, die Milch wird zur Strahlpumpe 14 gefördert, gleichzeitig wird die Strahlpumpe 14 mit Dampf betrieben und erhitzt die Milch. Auf der Saugseite der Pumpe 7 entsteht in der ersten Leitung 5 ein Unterdruck, über das zweite Drosselventil 22 wird durch die erste Luftzuführungsleitung 20 Luft angesaugt und in der ersten Leitung 5 der Milch beigemischt. In der Strahlpumpe 14 wird das Luftmilchgemisch zu warmem Milchschaum emulgiert.

Der Milchschaum weist in der Strahlpumpe 14 noch grosse Blasen auf. In der Emulgierkammer 15 wird der grobblasige Milchschaum, indem der Milchschaum tangential in die Emulgierkammer 15 eintritt, durch Rotation in der Emulgierkammer 15, bevor der Milchschaum unten aus der Emulgierkammer 15 austritt, zu feinem Schaum emulgiert. Dieser warme Milchschaum wird dem Verteilgefäss 17 zugeführt und gelangt durch dessen Ausgabenippel 18 und 19 in das darunter gestellte Gefäss.

Die Konsistenz des warmen Milchschaums ist hauptsächlich eine Funktion des Gemisches Milch-Luft-Dampf und somit abhängig vom Luftdurchlass durch das zweite Drosselventil 22 und der durch die Pumpe 7 geförderten Milchmenge.

Zur Erzeugung von kaltem Milchschaum ist das sechste Schliessventil 4, das zweite Schliessventil 29 und das vierte Schliessventil 25 geöffnet. Das erste Schliessventil 8, das dritte Schliessventil 23 und das fünfte Schliessventil 28 sind geschlossen. Die Milch wird durch Betätigen der Pumpe 7 über die Entnahmeleitung 3 in die erste Leitung 5 angesaugt. Über die zweite Luftzuführungsleitung 21 wird Luft angesaugt und der Milch zugemischt. Dieses Milch-Luft-Gemisch wird durch das erste Drosselventil 11 gepresst. In diesem ersten Drosselventil 11 emulgiert das Milch-Luft-Gemisch zu Milchschaum. Die Luft ist jedoch in der Milch noch teilweise in Form von grossen Blasen vorhanden. Dieses Milch-Luft-Gemisch gelangt in die Beruhigungsstrecke 12, welche aus einem Schlauch 30 besteht, der eine bestimmte Länge aufweist. In dieser Beruhigungsstrecke 12 emulgiert das Milch-Luft-Gemisch zu feinblasigem Schaum. Dieser gelangt über die zweite Leitung 10 in das Verteilgefäss 17 und über die beiden Ausgabenippel 18 und 19 in darunter gestellte Gefässe.

Um einen optimalen kalten Milchschaum zu erhalten, muss ein Systemdruck von ca. 8 bar vorhanden sein. Demzufolge muss die entsprechende Systemstrecke entsprechend für diesen Druck ausgelegt sein.

Die Art und die Konsistenz des kalten Milchschaums ist eine Funktion des Systemdrucks bzw. der Grösse des ersten Drosselventils 11, des Milch-Luft-Gemisches bzw. der förderbaren Menge der Pumpe 7, der Grösse des Luftdurchsatzes durch das dritte Drosselventil 24 sowie der Länge und des Durchmessers des Schlauches 30 der Beruhigungsstrecke 12.

Selbstverständlich ist diese Einrichtung zum Bezug dieser verschiedenen Produkte in bekannter Weise über eine Steuereinheit gesteuert. Hierbei ist die Einrichtungs- und die Steuereinheit so konfiguriert, dass beispielsweise die Produktewahl über Knopfdruck erfolgt, die erforderliche Schliessventilstellung wird eingestellt, Drosselventile können voreingestellt und gegebenenfalls nachgestellt werden, die Milchmenge kann vorgegeben sein, all dies kann über eine entsprechende Konfiguration der Einrichtung erhalten werden.

Nach dem Bezug einer bestimmten Anzahl der auswählbaren Produkte kann die Einrichtung gereinigt werden. Zur Reinigung der Strecke "kalter Milchschaum" wird das fünfte Schliessventil 28 und das zweite Schliessventil 29 geöffnet. Das sechste Schliessventil 4, das erste Schliessventil 8, das dritte Schliessventil 23 und das vierte Schliessventil 25 sind geschlossen. Über die Reinigungsmittelpumpe 27 wird über die Reinigungsmittelleitung 26 Reinigungsmittel in die erste Leitung 5, durch die Pumpe 7 in die zweite Leitung 10 gefördert, durchfliesst das erste Drosselventil 11, die Beruhigungsstrecke 12 und gelangt über das Verteilgefäss 17 und die Ausgabenippel 18 und 19 in einen entsprechenden Behälter. Für die Reinigung kann sowohl heisses als auch kaltes Wasser verwendet werden. Dieser Reinigungsvorgang kann an der Einrichtung konfiguriert und beispielsweise nach jedem Bezug nach einer gewissen Zeit automatisch ausgelöst werden.

Um die Strecke "warmer Milchschaum" bzw. "heisse Milch" reinigen zu können, wird das fünfte Schliessventil 28 und das erste Schliessventil 8 geöffnet. Das zweite Schliessventil 29, das dritte Schliessventil 23, das vierte Schliessventil 25 und das sechste Schliessventil 4 sind geschlossen. Wiederum wird über die Reinigungsmittelpumpe 27 Reinigungsmittel in die jeweilige Leitung eingebracht, durchläuft die Pumpe 7, die Strahlpumpe 14 und die Emulgierkammer 15, gelangt dann in das Verteilgefäss 17 und über die Ausgabenippel 18 und 19 in ein entsprechendes Gefäss. Zusätzlich kann über die Wasserdampfleitung 16 Wasserdampf beigemengt werden. Auch dieser Reinigungsvorgang kann automatisch ausgeführt werden.

Zusätzlich können auch das zweite Drosselventil 22 und das dritte Drosselventil 24 gereinigt werden, wozu das fünfte Schliessventil 28 geöffnet wird, ebenfalls geöffnet werden das dritte Schliessventil 23 bzw. das vierte Schliessventil 25, sämtliche anderen Ventile sind geschlossen, das Reinigungsmittel durchströmt dadurch jeweils das zweite Drosselventil 22 bzw. das dritte Drosselventil 24 und gelangt jeweils in den schematisch dargestellten Abguss 31.

Diese Einrichtung kann als autonome Einrichtung ausgebildet sein, sie kann aber auch in eine Kaffeemaschine integriert sein.

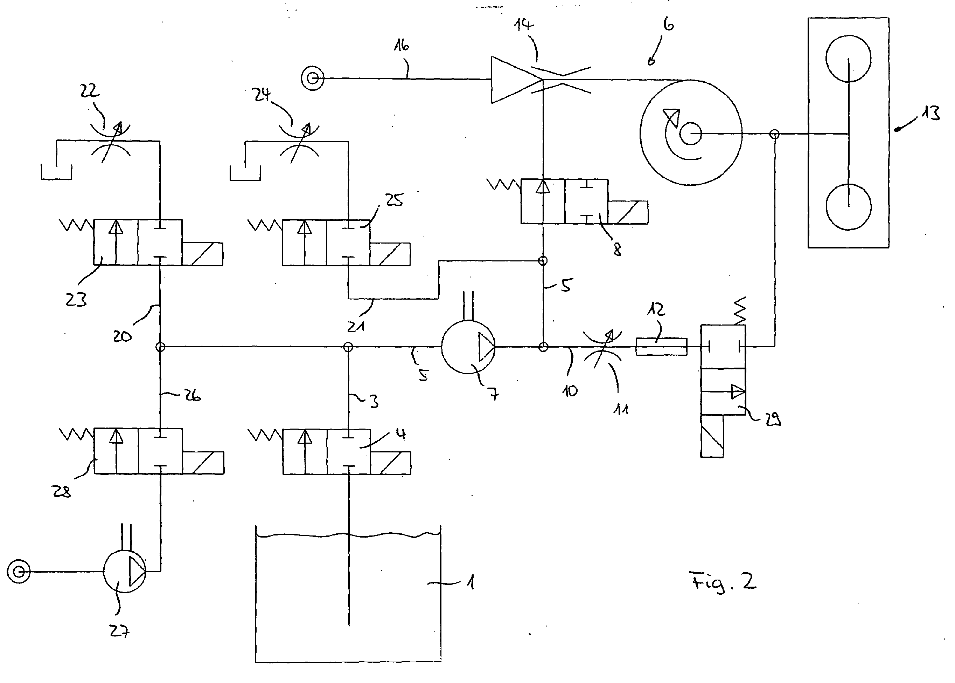

Fig. 2 zeigt eine Einrichtung zur Ausgabe von Milch und/oder Milchschaum, die im Wesentlichen der Einrichtung gemäss Fig. 1 entspricht, der einzige Unterschied besteht darin, dass die zweite Luftzuführungsleitung 21 auf der Druckseite der Pumpe 7 in die erste Leitung 5 mündet, durch diese zweite Luftzuführungsleitung 21 wird beim Bezug von warmem Milchschaum über die Strahlpumpe 14 die erforderliche Luft angesaugt. Die Bezüge der einzelnen Produkte erfolgt in identischer Weise, wie bei der Einrichtung gemäss Fig. 1, ebenso die Reinigung.

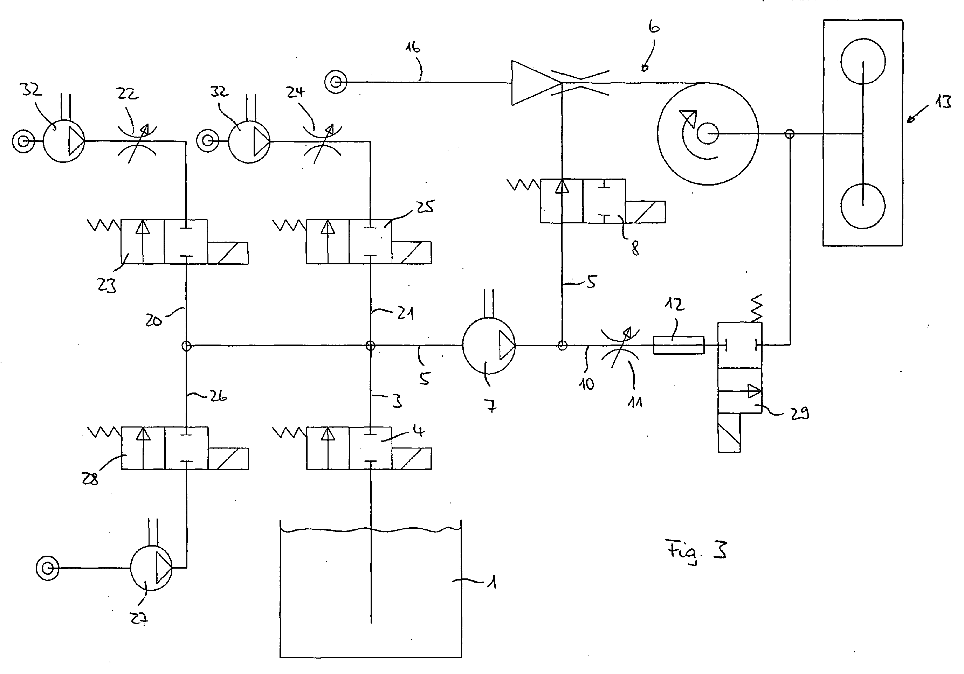

Die Einrichtung, wie sie in Fig. 3 dargestellt ist, entspricht derjenigen Einrichtung, wie sie der Fig. 1 entnehmbar ist, der einzige Unterschied besteht darin, dass in der ersten Luftzuführungsleitung 20 und der zweiten Luftzuführungsleitung 21 vor dem jeweiligen Drosselventil 22 und 24 eine Luftpumpe 32 eingesetzt ist. Dadurch kann die Luft aktiv in die erste Leitung 5 auf der Saugseite der Pumpe 7 eingebracht werden. Die Reinigung des zweiten Drosselventils 22 und des dritten Drosselventils 24 muss hierbei nicht mehr durch das Reinigungsmittel erfolgen, das über die Reinigungsmittelpumpe 27 zugeführt wird. Vielmehr können diese beiden Drosselventile 22 und 24 jeweils durch Luftstösse der beiden Luftpumpen 32 gereinigt werden.

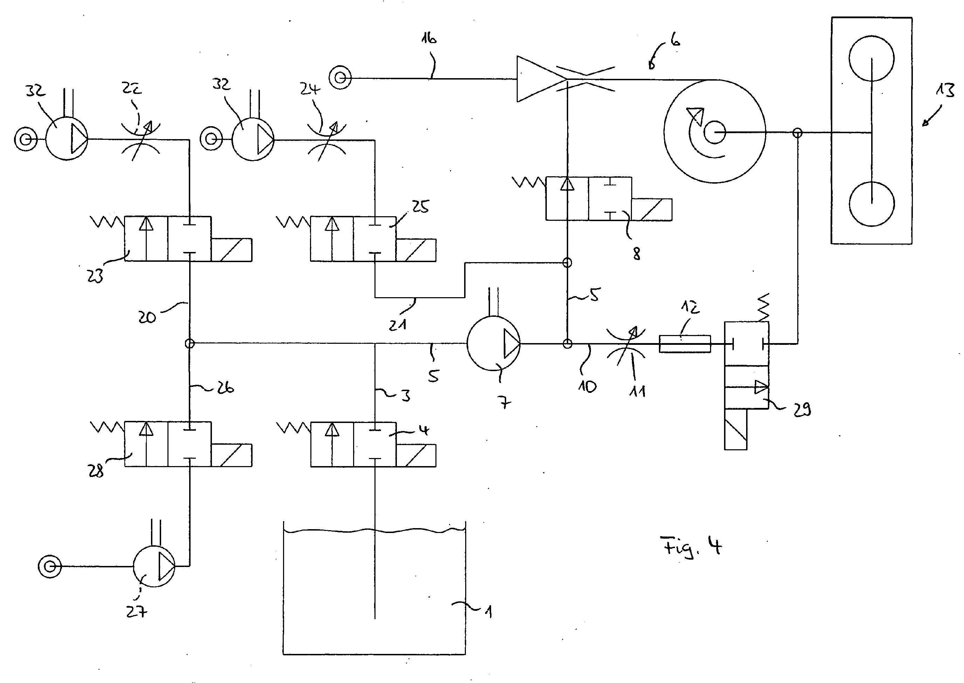

Die Einrichtung gemäss Fig. 4 entspricht im Wesentlichen der Einrichtung gemäss Fig. 3, der einzige Unterschied besteht darin, dass die zweite Luftzuführungsleitung 21 nach der Pumpe 7, also auf deren Druckseite, in die erste Leitung 5 mündet. Der Bezug der verschiedenen Produkte aus dieser Einrichtung erfolgt entsprechend den vorgängig beschriebenen Einrichtungen, gereinigt wird das System entsprechend der Einrichtung gemäss Fig. 3.

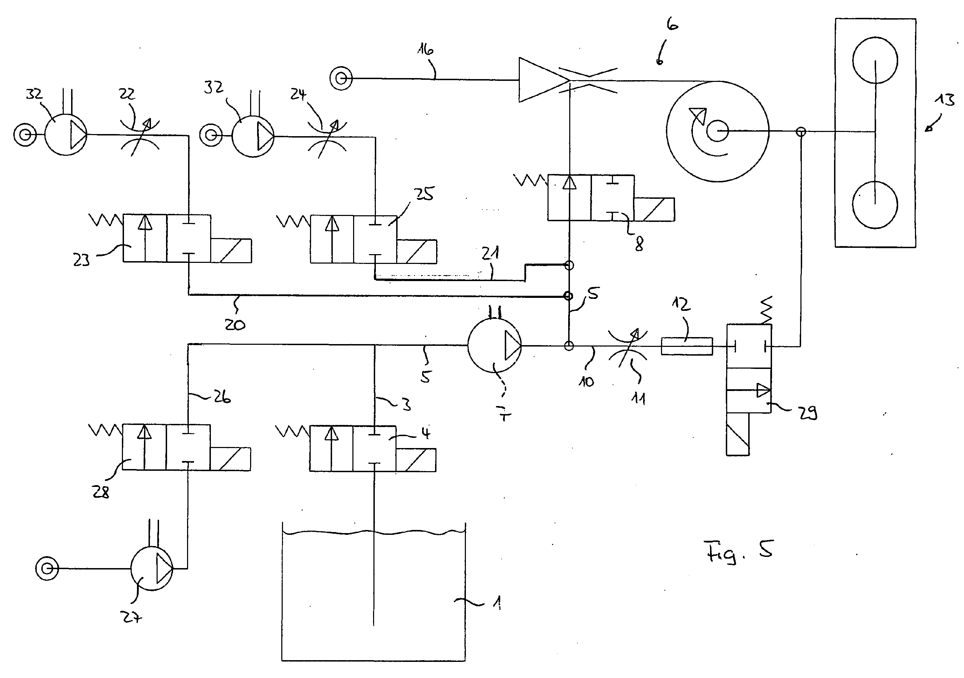

Die Einrichtung gemäss Fig. 5 entspricht im Wesentlichen der Einrichtung gemäss Fig. 4, wobei aber die erste Luftzuführungsleitung 20 ebenfalls erst nach der Pumpe 7, also auf deren Druckseite, in die erste Leitung 5 mündet. Der Bezug der einzelnen Produkte bleibt sich gleich, wie bei den vorgängig beschriebenen Einrichtungen, die Reinigung der beiden Drosselventile 22 und 24 erfolgt ebenfalls über Luftstösse der entsprechenden Luftpumpen 32.

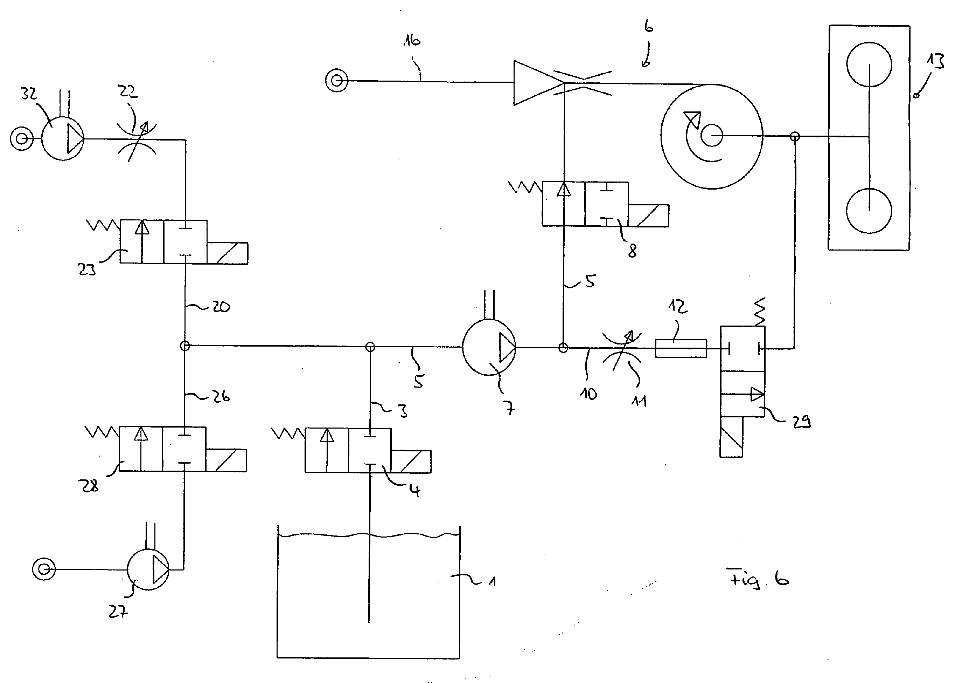

Fig. 6 zeigt eine Einrichtung zum Bezug von Milch und/oder Milchschaum, bei welcher nur die erste Luftzuführungsleitung 20 vorgesehen ist, die saugseitig vor der Pumpe 7 in die erste Leitung 5 mündet. Zusätzlich ist die Luftpumpe 32 angebracht. Der Bezug der einzelnen Produkte erfolgt in gleicher Weise wie bei den vorgängig beschriebenen Einrichtungen, hierbei wird aber die erforderliche Luft für die entsprechenden Produkte nur durch diese erste Luftzuführungsleitung 20 zugeführt, die über die Luftpumpe 32 zugeführte Luftmenge wird elektronisch kontrolliert, die Luftpumpe 32 fördert somit für die Erzeugung von kaltem Milchschaum bzw. von warmem Milchschaum unterschiedlich viel Luft.

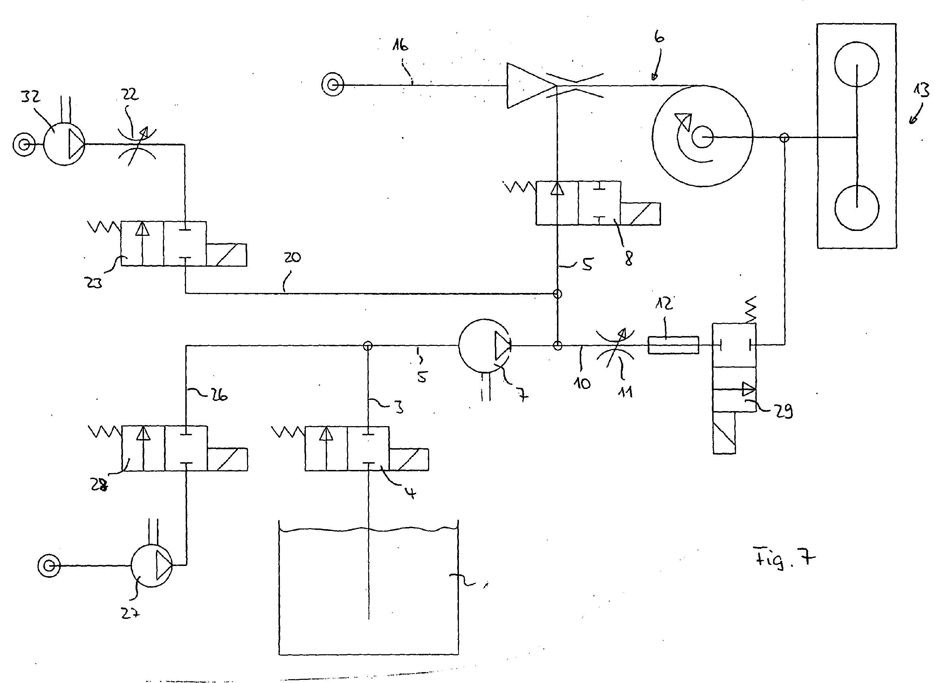

Die Einrichtung zur Ausgabe von Milch und/oder Milchschaum, wie sie in Fig. 7 dargestellt ist, entspricht im Wesentlichen derjenigen Einrichtung, dargestellt in Fig. 6, wobei aber die erste Luftzuführungsleitung 20 nach der Pumpe 7, also auf deren Druckseite, in die erste Leitung 5 eingeleitet wird. Die Funktionsweise dieser Einrichtung entspricht der Funktionsweise der Einrichtung gemäss Fig. 6.

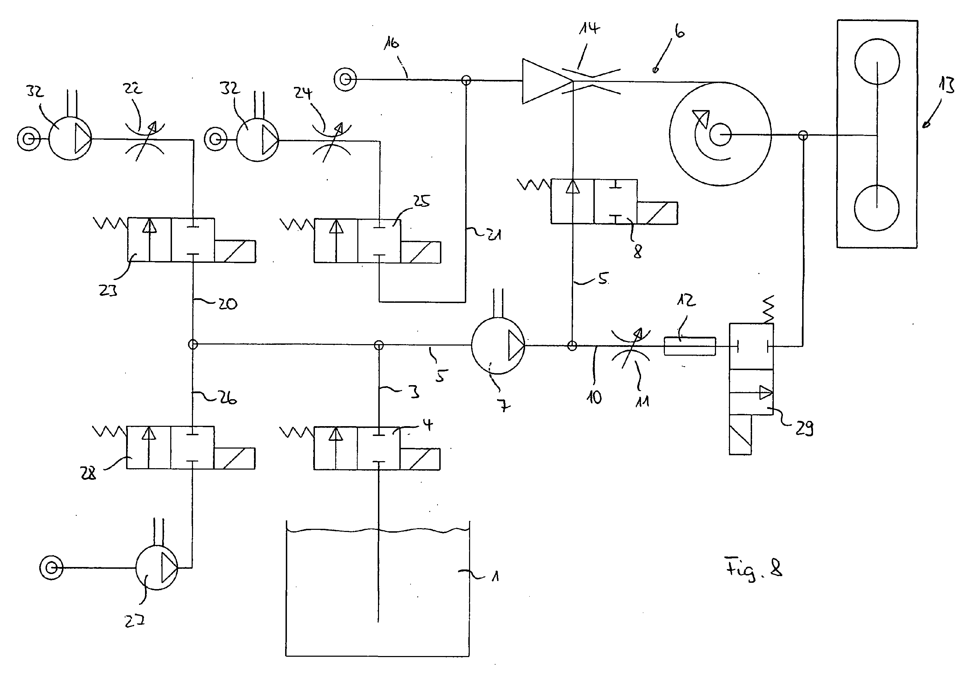

Die Einrichtung zur Ausgabe von Milch und/oder Milchschaum, wie sie in Fig. 8 dargestellt ist, entspricht im Wesentlichen der Einrichtung gem. Fig. 3, wobei die zweite Luftzuführungsleitung 21 aber in die Wasserdampfleitung 16 mündet, und dadurch die Luft zur Herstellung von warmem Milchschaum in die Wasserdampfleitung 16 und von dort der Strahlpumpe 14 zugeführt wird, sodass in bekannter Weise der Milchschaum in der Emulgiereinrichtung 6 emulgiert werden kann. Der Bezug der einzelnen Produkte erfolgt in gleicher Weise, wie bei den vorgängig beschriebenen Ausführungsformen.

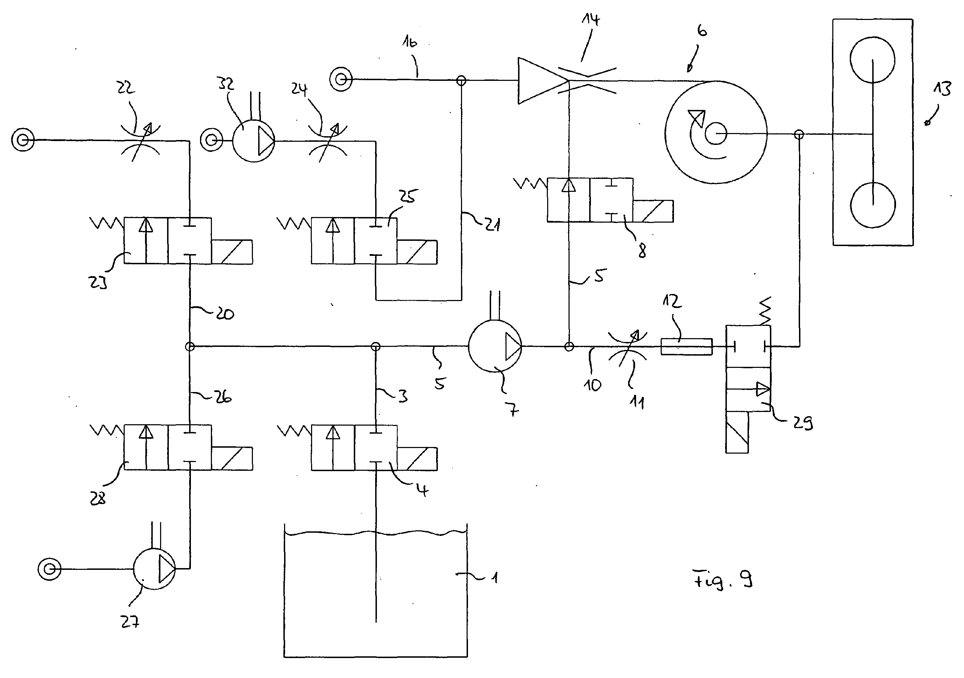

Fig. 9 zeigt eine Einrichtung, die im Wesentlichen derjenigen gemäss Fig. 8 entspricht, wobei der einzige Unterschied darin besteht, dass hier die Luftpumpe 32 in der ersten Luftzuführungsleitung 20 weggelassen ist, und dass bei der Erzeugung von kaltem Milchschaum die erforderliche Luft über die Pumpe 7 angesaugt und der Milch beigemischt wird.

Die in den Fig. 1 bis 9 dargestellten Einrichtungen weisen jeweils sechs Schliessventile auf, die als 2/2-Wegeventile ausgebildet sind. In vorteilhafter Weise sind diese Schliessventile Schlauchquetschventile, wodurch diese in optimaler Weise gereinigt werden können, in diesen Ventilen befinden sich keine beweglichen Komponenten in der Leitung, die mit Milch verkrusten und zu Störungen führen könnten. Handelsübliche Schlauchquetschventile sind jedoch meistens nur für einen Druck von ca. 0.5 bis 1 bar geeignet.

Wie bereits vorgängig beschrieben worden ist, müssen das erste Schliessventil 8 und das zweite Schliessventil 29 aber Drücke bis zu 8 bar aushalten. Deshalb werden für diese beiden Schliessventile motorisch betriebenen Ventile eingesetzt.

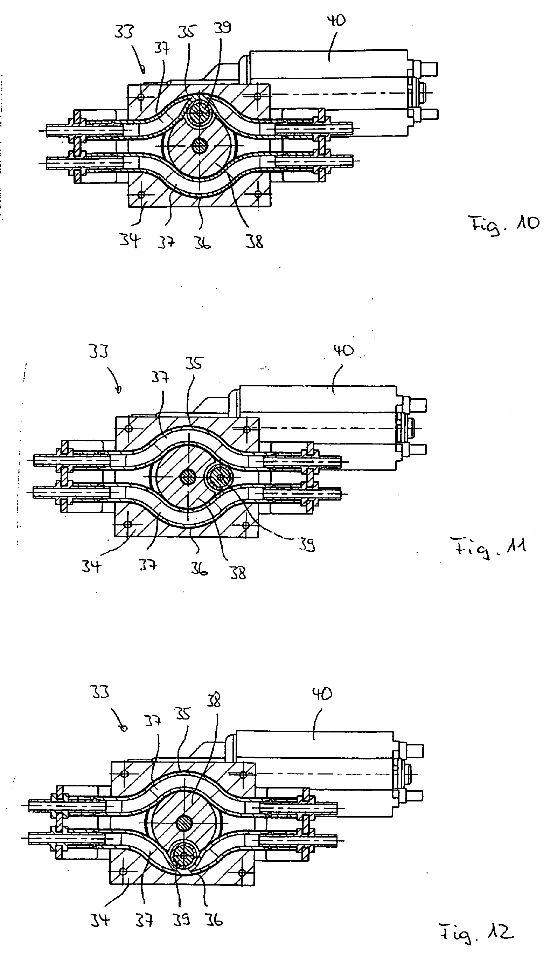

Diese beiden Schliessventile können beispielsweise als Kombinationsventil 33 ausgebildet sein, wie dies in den Fig. 10-12 dargestellt ist. Dieses Kombinationsventil 33 umfasst ein Gehäuse 34, welches zwei bogenförmige Aufnahmebereiche 35 und 36 für die Aufnahme jeweils eines Schlauches 37 aufweist. Dieser Schlauch 37 ist vorzugsweise ein netzverstärkter Schlauch, wodurch eine Druckbeaufschlagung von 8 bar ermöglicht wird. Zwischen den bogenförmigen Bereichen 35 und 36 und den beiden Schläuchen 37 ist ein drehbares Element 38 angebracht. An diesem drehbaren Element ist eine Schliessrolle 39 angeordnet. Das drehbare Element 38 ist über einen Elektromotor 40 antreibbar.

Dieses drehbare Element 38 kann so verdreht werden, dass die Schliessrolle 39 sich im einen bogenförmigen Bereich 35 befindet und den in diesem bogenförmigen Bereich 35 angeordneten Schlauch 37 quetscht, wie dies in Fig. 10 dargestellt ist, wodurch dieser Schlauchbereich vollständig verschlossen ist.

Das drehbare Element 38 kann in einen Bereich zwischen den bogenförmigen Bereichen 35 und 36 verdreht werden, wie dies in Fig. 11 dargestellt ist, dadurch sind beide Schläuche 37, die sich in den jeweiligen bogenförmigen Bereichen 35 und 36 befinden, geöffnet, das entsprechende Medium kann somit durch beide Schläuche 37 hindurch fliessen.

Das drehbare Element 38 kann weiter gedreht werden, bis es in den anderen bogenförmigen Bereich 36 gelangt, in dem ebenfalls ein Schlauch 37 angeordnet ist, wie dies in Fig. 12 dargestellt ist, der Schlauch 37 des bogenförmigen Bereiches 36 wird dadurch zusammengequetscht und verschlossen. Die Steuerung dieses Kombinationsventils 33 erfolgt in bekannter Weise über die nicht dargestellte Steuereinheit zur Steuerung der erfindungsgemässen Einrichtung. Mit diesem Kombinationsventil 33 wird ein optimal funktionierendes Doppelventil erreicht, das in einfachster Weise gereinigt werden kann, das für hohe Drücke geeignet ist und das einfach betätigbar ist.

Mit diesen vorgängig beschriebenen erfindungsgemässen Einrichtungen wird erreicht, dass heisse Milch, kalte Milch, heisser Milchschaum und kalter Milchschaum in der optimalsten gewünschten Qualität gemacht werden kann, wobei insbesondere der warme Milchschaum und der kalte Milchschaum die gewünschte Konsistenz aufweisen.

## Patentansprüche

1. Einrichtung zur Ausgabe von Milch und/oder Milchschaum aus einem Milch enthaltenden Behälter (1), der in einen in einem Rahmen gehaltenen, kühlbaren Schrank (2) einsetzbar ist, und in welchen eine Entnahmeleitung (3) einbringbar ist, welche über eine erste Leitung (5) mit einer ausserhalb des kühlbaren Schrankes (2) angeordneten Emulgiereinrichtung (6) verbunden ist, in welche erste Leitung (5) eine Pumpe (7) zur Förderung der Milch eingesetzt ist, durch welche die auszugebende Milch in die Emulgiereinrichtung (6) und zu einer Ausgabeeinheit (13) gelangt, in welche Emulgiereinrichtung (6) über eine Wasserdampfleitung (16) Wasserdampf einführbar ist, mit welchem die durch die Emulgiereinrichtung (6) geleitete Milch aufschäumbar und/oder erwärmbar ist, **dadurch gekennzeichnet, dass** in der ersten Leitung (5) zwischen der Pumpe (7) und der Emulgiereinrichtung (6) eine Abzweigung (9) angebracht ist, an welcher eine zweite Leitung (10) angebracht ist, in welcher ein erstes Drosselventil (11) und eine Beruhigungsstrecke (12) angeordnet sind, welche zweite Leitung (10) in die Ausgabeeinheit (13) mündet, dass in der ersten Leitung (5) zwischen Abzweigung (9) und Emulgiereinrichtung (6) ein erstes Schliessventil (8) und in der zweiten Leitung (10) vor der Ausgabeeinheit (13) ein zweites Schliessventil (29) angeordnet ist, und dass in die erste Leitung (5) und in die zweite Leitung (10) Luft zuführbar ist.

2. Einrichtung nach Anspruch 1, **dadurch gekennzeichnet, dass** die Luftzuführung über mindestens eine erste Luftzuführungsleitung (20) erfolgt, welche mit einem zweiten Drosselventil (22) ausgestattet ist.

3. Einrichtung nach Anspruch 2, **dadurch gekennzeichnet, dass** die erste Luftzuführungsleitung (20) mit einem dritten Schliessventil (23) verschliessbar ist.

4. Einrichtung nach Anspruch 2 oder 3, **dadurch gekennzeichnet, dass** das zweite Drosselventil (22) regulierbar ist.

5. Einrichtung nach einem der Ansprüche 2 bis 4, **dadurch gekennzeichnet, dass** in die erste Luftzuführungsleitung (20) eine erste Luftpumpe (32) eingesetzt ist.

6. Einrichtung nach einem der Ansprüche 2 bis 5, **dadurch gekennzeichnet, dass** die erste Luftzuführungsleitung (20) vor der Pumpe (7) in die erste Leitung (5) mündet.

7. Einrichtung nach Anspruch 5, **dadurch gekennzeichnet, dass** die erste Luftzuführungsleitung (20) nach der Pumpe (7) in die erste Leitung (5) mündet.

8. Einrichtung nach einem der Ansprüche 2 bis 7, **dadurch gekennzeichnet, dass** die Luftzuführung über die erste Luftzuführungsleitung (20) oder eine zweite Luftzuführungsleitung (21) erfolgt, welche mit einem dritten Drosselventil (24) ausgestattet ist.

9. Einrichtung nach Anspruch 8, **dadurch gekennzeichnet, dass** die zweite Luftzuführungsleitung (21) mit einem vierten Schliessventil (25) verschliessbar ist.

10. Einrichtung nach Anspruch 8 oder 9, **dadurch gekennzeichnet, dass** in die zweite Luftzuführungsleitung (21) eine zweite Luftpumpe (32) eingesetzt ist.

11. Einrichtung nach einem der Ansprüche 8 bis 10, **dadurch gekennzeichnet, dass** die zweite Luftzuführungsleitung (21) vor der Pumpe (7) in die erste Leitung (5) mündet.

12. Einrichtung nach Anspruch 10, **dadurch gekennzeichnet, dass** die zweite Luftzuführungsleitung (21) nach der Pumpe (7) in die erste Leitung (5) mündet.

13. Einrichtung nach einem der Ansprüche 8 bis 10, **dadurch gekennzeichnet, dass** die zweite Luftzuführungsleitung (21) in die Wasserdampfleitung (16) mündet.

14. Einrichtung nach einem der Ansprüche 1 bis 13, **dadurch gekennzeichnet, dass** das erste Drosselventil (11) einstellbar ist.

15. Einrichtung nach einem der Ansprüche 1 bis 14, **dadurch gekennzeichnet, dass** die Beruhigungsstrecke (12) aus einem Schlauch (30) mit einer vorgegebenen Länge gebildet ist.

16. Einrichtung nach einem der Ansprüche 1 bis 15, **dadurch gekennzeichnet, dass** in die erste Leitung (5) vor der Pumpe (7) eine Reinigungsmittelleitung (26) mündet, über welche ein Reinigungsmittel zuführbar ist, und dass in die Reinigungsmittelleitung (26) ein fünftes Schliessventil (28) eingesetzt ist.

17. Einrichtung nach einem der Ansprüche 1 bis 16, **dadurch gekennzeichnet, dass** in die Entnahmeleitung (3) ein sechstes Schliessventil (4) eingesetzt ist.

## Claims

1. Device for dispensing milk and/or milk foam from a container (1) containing milk, which container is insertable into a coolable cabinet (2) held in a frame, and in which container an extraction line (3) is placeable, which is connected via a first line (5) to an emulsifying device (6) disposed outside the coolable cabinet (2), in which first line (5) a pump (7) is inserted for conveying the milk, through which first line the milk to be dispensed reaches the emulsifying device (6) and arrives at a dispensing unit (13), in which emulsifying device (6) steam is able to be brought in via a steam line (16), with which steam the milk led through the emulsifying device (6) is able to be frothed up and/or is able to be heated, **characterised in that** a branch connection (9) is attached in the first line (5) between the pump (7) and the emulsifying device (6), to which branch connection a second line (10) is attached, in which second line a first choke valve (11) and a flow calming section (12) are disposed, which second line (10) comes out in the dispensing unit (13), **in that** a first closing valve (8) is disposed in the first line (5) between branch connection (9) and emulsifying device (6), and a second closing valve (29) is disposed in the second line (10) in front of the dispensing unit (13), and **in that** air is able to be supplied into the first line (5) and into the second line (10).

2. Device according to claim 1, **characterised in that** the air supply takes place via at least one first air supply line (20), which is provided with a second choke valve (22).

3. Device according to claim 2, **characterised in that** the first air supply line (20) is closable with a third closing valve (23).

4. Device according to claim 2 or 3, **characterised in that** the second choke valve (22) is adjustable.

5. Device according to one of the claims 2 to 4, **characterised in that** a first air pump (32) is inserted in the first air supply line (20).

6. Device according to one of the claims 2 to 5, **characterised in that** the first air supply line (20) comes out in the first line (5) in front of the pump (7).

7. Device according to claim 5, **characterised in that** the first air supply line (20) comes out in the first line (5) after the pump (7).

8. Device according to one of the claims 2 to 7, **characterised in that** the air supply takes place via the first air supply line (20) or a second air supply line (21) which is provided with a third choke valve (24).

9. Device according to claim 8, **characterised in that** the second air supply line (21) is closable with a fourth closing valve (25).

10. Device according to claim 8 or 9, **characterised in that** a second air pump (32) is inserted in the second air supply line (21).

11. Device according to one of the claims 8 to 10, **characterised in that** the second air supply line (21) comes out in the first line (5) in front of the pump (7).

12. Device according to claim 10, **characterised in that** the second air supply line (21) comes out in the first line (5) after the pump (7).

13. Device according to one of the claims 8 to 10, **characterised in that** the second air supply line (21) comes out in the steam line (16).

14. Device according to one of the claims 1 to 13, **characterised in that** the first choke valve (11) is adjustable.

15. Device according to one of the claims 1 to 14, **characterised in that** the flow calming section (12) is composed of a hose (30) with a predetermined length.

16. Device according to one of the claims 1 to 15, **characterised in that** a cleaning agent line (26) comes out in the first line (5) in front of the pump (7), via which cleaning agent line a cleaning agent is able to be supplied, and **in that** a fifth closing valve (28) is inserted in the cleaning agent line (26).

17. Device according to one of the claims 1 to 16, **characterised in that** a sixth closing valve (4) is inserted in the extraction line (3).

## Revendications

1. Dispositif de distribution de lait et/ou de mousse de lait depuis un récipient (1) qui contient du lait, ledit récipient pouvant être inséré dans un compartiment réfrigérable (2) maintenu dans un bâti, et dans lequel le récipient peut être mise une conduite de reprise (3) reliée par une première conduite (5) à un dispositif émulsifiant (6) agencé en-dehors dudit compartiment réfrigérable (2), une pompe (7) pour transporter le lait étant insérée dans ladite première conduite (5) au travers de laquelle le lait devant être distribué arrive audit dispositif émulsifiant (6) et à une unité de distribution (13), dans lequel le dispositif émulsifiant (6), de la vapeur peut être amenée via une conduite de vapeur (16), avec laquelle vapeur, le lait amené au travers dudit dispositif émulsifiant (6) est susceptible d'être moussé et/ou susceptible d'être chauffé, **caractérisé en ce qu'**un branchement (9) est agencé dans ladite première conduite (5) entre ladite pompe (7) et ledit dispositif émulsifiant (6) auquel le branchement d'une seconde conduite (10) est agencée dans laquelle une première soupape d'étranglement (11) et un tronçon stabilisateur d'écoulement (12) sont agencés, laquelle seconde conduite (10) débouche dans ladite unité de distribution (13), **en ce qu'**une première soupape de fermeture (8) est agencée dans ladite première conduite (5) entre ledit branchement (9) et ledit dispositif émulsifiant (6), et une seconde soupape de fermeture (29) est agencée dans ladite seconde conduite (10) devant ladite unité de distribution (13), et **en ce que** ladite première conduite (5) et ladite seconde conduite (10) sont susceptibles d'être alimentées en air.

2. Dispositif selon la revendication 1, **caractérisé en ce que** l'alimentation en air s'effectue via au moins une première conduite d'alimentation en air (20) pourvue d'une seconde soupape d'étranglement (22).

3. Dispositif selon la revendication 2, **caractérisé en ce que** ladite première conduite d'alimentation en air (20) est susceptible d'être fermée avec une troisième soupape de fermeture (23).

4. Dispositif selon la revendication 2 ou 3, **caractérisé en ce que** ladite seconde soupape d'étranglement (22) est susceptible d'être réglée.

5. Dispositif selon l'une des revendications 2 à 4, **caractérisé en ce qu'**une première pompe à air (32) est insérée dans ladite première conduite d'alimentation en air (20).

6. Dispositif selon l'une des revendications 2 à 5, **caractérisé en ce que** ladite première conduite d'alimentation en air (20) débouche dans ladite première conduite (5) devant ladite pompe (7).

7. Dispositif selon la revendication 5, **caractérisé en ce que** ladite première conduite d'alimentation en air (20) débouche dans ladite première conduite (5) derrière ladite pompe (7).

8. Dispositif selon l'une des revendications 2 à 7, **caractérisé en ce que** l'alimentation en air s'effectue via ladite première conduite d'alimentation en air (20) ou via une seconde conduite d'alimentation en air (21) pourvue d'une troisième soupape d'étranglement (24).

9. Dispositif selon la revendication 8, **caractérisé en ce que** ladite seconde conduite d'alimentation en air (21) est susceptible d'être fermée avec une quatrième soupape de fermeture (25).

10. Dispositif selon la revendication 8 ou 9, **caractérisé en ce qu'**une seconde pompe à air (32) est insérée dans ladite seconde conduite d'alimentation en air (21).

11. Dispositif selon l'une des revendications 8 à 10, **caractérisé en ce que** ladite seconde conduite d'alimentation en air (21) débouche dans ladite première conduite (5) devant ladite pompe (7).

12. Dispositif selon la revendication 10, **caractérisé en ce que** ladite seconde conduite d'alimentation en air (21) débouche dans ladite première conduite (5) derrière ladite pompe (7).

13. Dispositif selon l'une des revendications 8 à 10, **caractérisé en ce que** ladite seconde conduite d'alimentation en air (21) débouche dans ladite conduite de vapeur (16).

14. Dispositif selon l'une des revendications 1 à 13, **caractérisé en ce que** ladite première soupape d'étranglement (11) est susceptible d'être ajustée.

15. Dispositif selon l'une des revendications 1 à 14, **caractérisé en ce que** ledit tronçon stabilisateur d'écoulement (12) est composé d'un tuyau souple (30) d'une longueur prédéterminée.

16. Dispositif selon l'une des revendications 1 à 15, **caractérisé en ce qu'**une conduite d'agent de nettoyage (26) débouche dans ladite première conduite (5) devant ladite pompe (7), via laquelle conduite d'agent de nettoyage, un agent de nettoyage est susceptible d'être amené, et **en ce qu'**une cinquième soupape de fermeture (28) est insérée dans ladite conduite d'agent de nettoyage (26).

17. Dispositif selon l'une des revendications 1 à 16, **caractérisé en ce qu'**une sixième soupape de fermeture (4) est insérée dans ladite conduite de reprise (3).
